# EUROPEAN PATENT SPECIFICATION

(11) **EP 0 656 242 B1**
(45) Date of publication and mention of the grant of the patent: **10.06.1998**
(21) Application number: 94203483.6
(22) Date of filing: 30.11.1994
(51) Int. Cl.: B23Q 1/25, B23Q 37/00

(54) **A machining unit for an automatic machine-tool**
Bearbeitungseinheit einer automatischen Werkzeugmaschine
Unité d'usinage d'une machine-outil automatique

(30) Priority: 03.12.1993 IT MI932548
(43) Date of publication of application: 07.06.1995
(73) Proprietor: RIELLO MACCHINE UTENSILI S.p.A., I-37046 Minerbe (Verona) (IT)
(72) Inventor: Zecchetto, Luigi, I-37046 Minerbe, (Verona) (IT); Lipomani, Biagio, I-37046 Minerbe, (Verona) (IT)
(74) Representative: Caregaro, Silvio, Ing.

(56) References cited:
- EP-A- 0 536 067
- FR-A- 1 238 368
- FR-A- 1 382 111
- GB-A- 1 200 251
- US-A- 5 090 489

## Description

The present invention relates in general to machining units for automatic machine-tools for example those with several stations wherein in each station there is provided one of said units which must perform a specific machining operation on a workpiece, generally different from that of the other units. These machines are used when a plurality of machining operations must be performed in sequence on the same workpiece.

Each unit is provided with a spindle which holds a working tool and which is able to perform, owing to the action of suitable actuating means to which it is connected, both a rotational movement about its longitudinal axis and a rectilinear movement towards the workpiece or away from the latter, depending on the type of tool and the machining operation which the latter must perform.

Machining units of the above type are known and it is also known that they consist essentially of a hollow body inside which there is arranged the spindle supported at its front end, i.e. that to which the working tool is fitted, in a freely rotatable manner and without the possibility of axial displacements, by a sleeve also located inside the aforementioned hollow body. The spindle, at its other end, is supported by means which permit bidirectional axial displacements thereof and which at the same time cause it to rotate. These means may be of any kind, such as for example a longitudinally hollow and splined shaft or a splined bush, inside which the rear part of the spindle is inserted in a sliding manner without the possibility of mutual rotation. The rear end of the aforementioned splined shaft or bush projects outside the hollow body of the unit and is generally formed as a gear so as to be able to be connected, via a toothed belt or the like, to a drive motor which causes rotation thereof and hence rotation of the spindle.

The sleeve which supports the front end of the spindle, as mentioned above, is rigid with or as one piece with means which effect its axial and bidirectional displacements. In this connection it is known that these units, known in the specific art as "sleeve-type" units, are classified in two quite separate categories depending on the type of means which effect the displacements of the sleeve. There exist in fact, as is known, mechanically operated units and hydraulically operated units.

In the mechanical units of the first type the sleeve in question is made rigid or as one piece with a nut which is screwed onto a screw made to rotate by suitable actuating means. Since the screw is housed in an axially stationary manner inside the hollow body of the unit, its direction of rotation causes the forward movement or backward movement of the sleeve and, consequently, of the spindle rigid therewith. These displacements are possible since the body of the screw is hollow and the spindle is freely slidable inside it.

From the above it is obvious that the forward and backward movements as well as rotation of the spindle, and hence of the tool held by it, are effected in this way and it is sufficient to activate, consequently, the aforementioned actuating means in order to obtain the desired operation.

According to another known embodiment of the mechanically operated machining unit, the translatory movements of the spindle are always effected by a screw/nut assembly, but in this case the sleeve is threaded externally and is screwed inside the hollow body of the unit, thus performing the function of the screw as described above for the first known solution. The rotations in either direction of the sleeve cause consequent displacements of the latter and hence of the spindle which is housed rotatably inside it without the possibility of axial displacements so that the same operation already described above is in fact obtained.

US-A-5,090,489, which discloses the features of the preamble to independent claim 1, discloses a mechanically operated unit of the above mentioned type wherein driving means are used to drive into rotation the threaded spindle controlling the axial displacement of the tool spindle, which driving means giving access to said threaded spindle through a side opening or passage provide in the outer casing of the unit.

FR-A-1,238,368 discloses a machining unit comprising a displaceable tool holding spindle the displacement of which is mechanically controlled by means of a cam mechanism and is carried out either mechanically or hydraulically.

The difference between the mechanical embodiment and the hydraulic one resides in that in the former case the transmission of the command given by the control cam takes place through a mechanical chain, whereas in the hydraulic embodiment a fluid is compressed by the cam movement for the displacement of the said spindle.

The return strike of the spindle takes place owing to the action of a contrading spring. In the hydraulic machining units of the second type, the axial rectilinear displacements of the sleeve, and hence of the spindle, are effected by a piston which is generally hydraulic. The rod of this piston is, according to the state of the art known hitherto, formed by the same sleeve since it must be the displaceable member of the piston. The cylinder of the latter consists of a portion of the external wall of the hollow body of the unit which defines, with a corresponding portion of the sleeve, the internal chamber of the piston.

The choice as to whether to use a machining unit with screw/nut instead of the unit with piston and viceversa is determined by generally subjective requirements and factors which vary significantly from one user to another. It is desirable that the valuation parameter which orients the purchaser towards one type of unit rather than the other should be the type of machining operation which the unit must perform. Another factor which influences the purchaser's choice is the degree of precision of the machining operation and hence that of the spindle travel.

From the above it is clear that the orders which the manufacturers of these units receive obviously vary and - what is most important for efficient production planning - absolutely unpredictable.

The above situation results in a large number of drawbacks and disadvantages for the manufacturer. In fact, the two types of unit, as it has been possible to ascertain above, in addition to being intrinsically different from one another owing to the type of means which perform the displacements of the sleeve, also differ greatly on account of the design of the hollow body which houses the operating components of the unit and also the design of the latter.

It is important to mention another important fact also known in the specific art, consisting in the fact the adjustments which are necessary and indispensable for the two types of unit are also different, as are consequently the means for performing the said adjustments.

A first notable drawback for the manufacturers of these units, in view of the unpredictable demand for the same, therefore consists in the fact that production is complex and costly, it being necessary to have special apparatus and equipment for one type of unit and other different apparatus and equipment for the second type.

Another not insignificant drawback consists in the fact that such a diversified production may result in a greater demand for one unit rather than the other and, since the diversity cannot be predicted in percentage terms, it also frequently happens that it is not possible to satisfy the client's request immediately.

Another drawback relates to the supply of spare parts for both the types of unit and, in this connection, substantially the same problems associated with the preceding drawback reoccur since, in this case also, forecasts as to the number of orders cannot be accurately formulated.

Another significant drawback which be added to the preceding ones, but which relates in particular to the hydraulically operated units, arises from the fact that the piston on the sleeve which effects the displacements of the sleeve itself is located at the front end of the unit and both the mechanical and thermal stresses (the drawn oil overheats) are transmitted directly both to the side wall of the hollow body and in particular to the sleeve which is not stably guided in that zone of the unit. In fact, it is able to resist these stresses only owing to the reaction of the bearings inside which the spindle rotates. This reaction is clearly insufficient to eliminate the action of the aforementioned stresses, such that it is inevitable that the front part of the unit is subject to deformations which compromise the position of the spindle and hence of the tool. In short, this results in less precise machining of the workpiece.

To the above must be added the further drawback of premature wear of the seals with a reduction in the sealing efficiency and the leakage of oil from the unit.

Yet another drawback of the conventional machining units, both of the mechanical and of the hydraulic type, arises from the fact the means for locking them to the frame of the machine-tool allow fixing thereof only in a set position as requested by the purchaser. If the latter, once the machine-tool has been substantially completed, changes his order as regards the length of the spindle travel and hence the distance at which the body of the unit must be fixed to the frame of the machine-tool, this creates serious problems for the manufacturer. If the new distance is greater, a practical solution consists in the use of suitable spacers to be applied to the locking means in question, although this obviously adversely affects the precision and stability of the fixture and hence also the precision of the machining operation which the unit must perform. If, on the other hand, the new distance is smaller, the unit must undergo major and complex modifications or else it may even become impossible to use it.

A machining unit for automatic machine-tools with several stations has now been devised and forms the subject of the present invention, whereby all the drawbacks of the conventional units mentioned above are eliminated.

One of the main aims of the present invention, therefore, is to provide a machining unit as defined above, the hollow body of which housing all the operating components has a novel and original design so as to be able to be used indifferently, without any modification, both in the case where a screw/nut assembly is used for the translatory movements of the spindle and in the case where an actuating piston is used.

Another important aim of the present invention is to provide a machining unit, the aforementioned hollow body of which enables production to be standardised and simplified, with a significant reduction in the complexity thereof and the costs involved.

Yet another aim of the present invention is that of substantially reducing, if not eliminating entirely, all the problems relating to the supply of spare parts, this being a direct outcome of standardisation of the production of the hollow body of the machining unit and also being due to the fact that the adjustment means are the same for both versions.

Another important aim of the present invention is to provide a machining unit, the means of which for effecting locking to the frame of the machine-tool allow fixing thereof in an easily adjustable position.

The present invention therefore relates to a machining unit for an automatic machine-tool, of the type comprising a hollow body designed to be fixed to the frame of the machine-tool via locking means with which it is provided, a tool-carrying spindle arranged inside said hollow body and housed in a freely rotatable manner without the possibility of sliding inside a sleeve in turn axially sliding inside said hollow body, said spindle projecting from the hollow body at one end or front end so as to receive and hold a tool to be operated, while at the other end or rear end it is supported in a substantially rigidly rotatable manner and with the possibility of axial sliding by support means which are made to rotate by actuating means connected thereto, the axial displacements of the spindle being performed together with those of said sleeve by actuating means cooperating with the latter, said unit being characterized in that at the rear end of the sleeve there is fixed an essentially annular internal collar, coaxial with said means for supporting the rear end of the spindle and having a diameter greater than that of said means, there being located axially opposite said collar an internal shoulder of the sleeve which is also essentially annular, coaxial with respect to the spindle and having a greater diameter than the latter, said collar being provided with at least a radial lug sliding in a longitudinal slit of the hollow body when the sleeve is displaced axially, at the rear of the aforementioned collar there being provided, inside the hollow body, an essentially annular cavity communicating with the exterior of the same via a pair of ducts formed in the wall of said hollow body for supplying and discharging a fluid under pressure.

In a first embodiment (figures 1 and 2 to 9) said collar is provided with two appendices arranged at 180° from one another, and projecting from the hollow body, while in one modified embodiment (figures 10 and 11) there is only one lug and it is arranged inside the hollow body.

The characteristic features as well as the advantages of the machining unit according to the present invention will emerge more clearly from the following detailed description, with reference to the accompanying figures, of their non-limiting examples of embodiment thereof, relating both to the mechanical and hydraulic type which use a screw/nut assembly and a piston for effecting the translatory movements of the spindle.

In the accompanying figures:

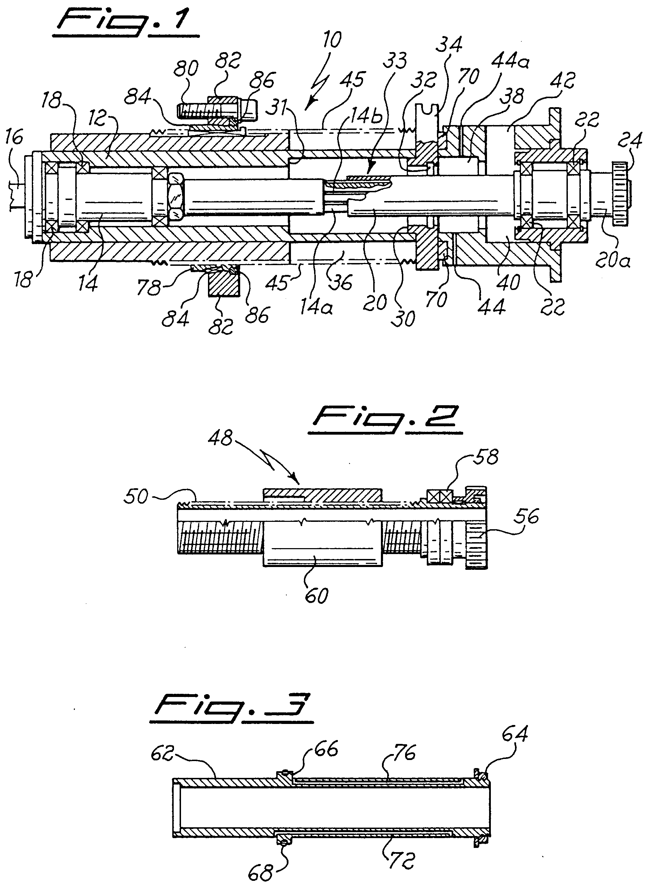

Figure 1 is a diagrammatic view, in longitudinal section, of solely the hollow body inside which the spindle and sleeve are housed and which is used in all the embodiments of the unit according to the invention;
Figure 2 is a diagrammatic view, partly in longitudinal section, of a screw/nut assembly which can be applied to the hollow body of Figure 1;

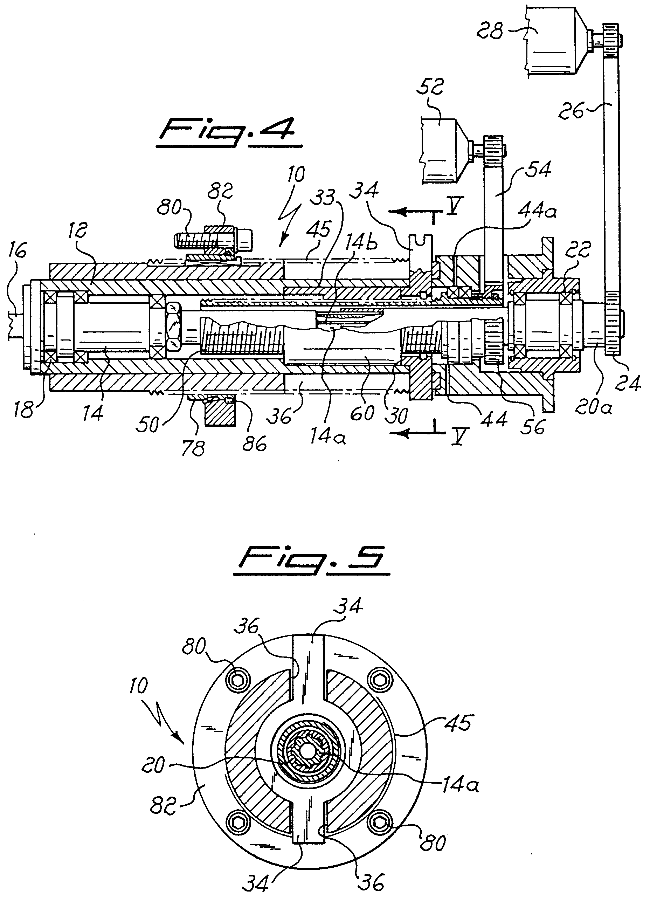

Figure 3 is a diagrammatic view, partly in longitudinal section, of a piston which can applied to the hollow body of Figure 1;
Figure 4 is a diagrammatic view, in longitudinal section, of a unit which uses the hollow body of Figure 1 with the screw/nut assembly of Figure 2, in which the spindle is completely retracted inside the hollow body;
Figure 5 is a diagrammatic view of the unit according to Figure 4, along the section V-V of the same figure;
Figure 6 is a diagrammatic view, in longitudinal section, of a unit which uses the hollow body of Figure 1 with the piston of Figure 3, in which the spindle is completely retracted inside the hollow body;

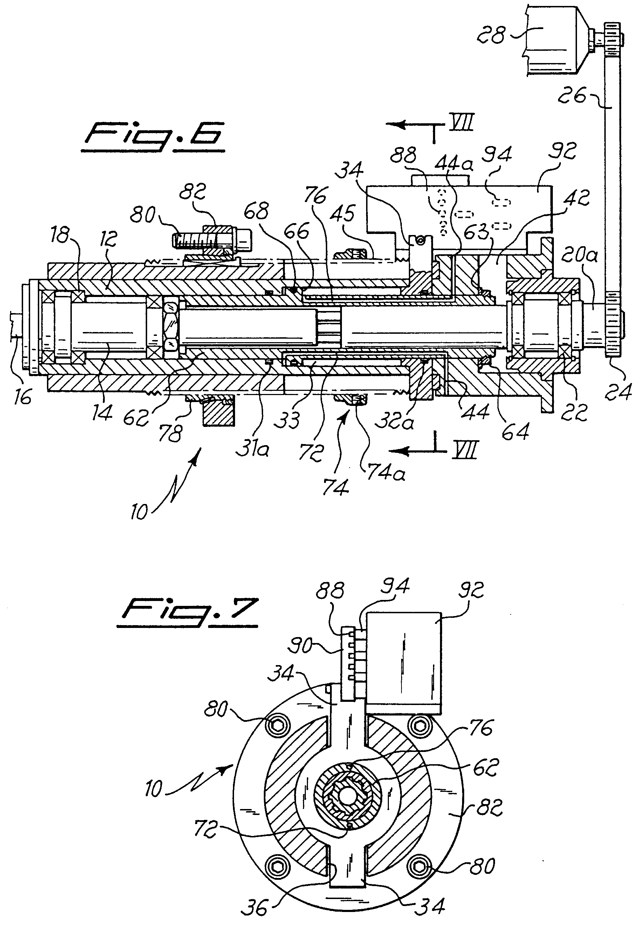

Figure 7 is a diagrammatic view of the unit according to Figure 6, along the section VII-VII of the same figure;

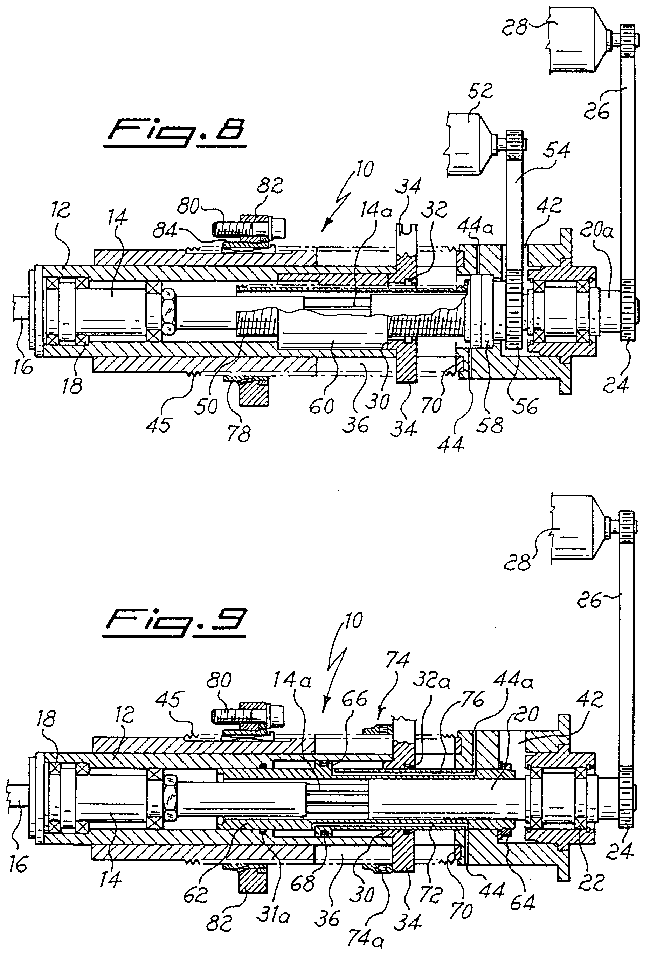

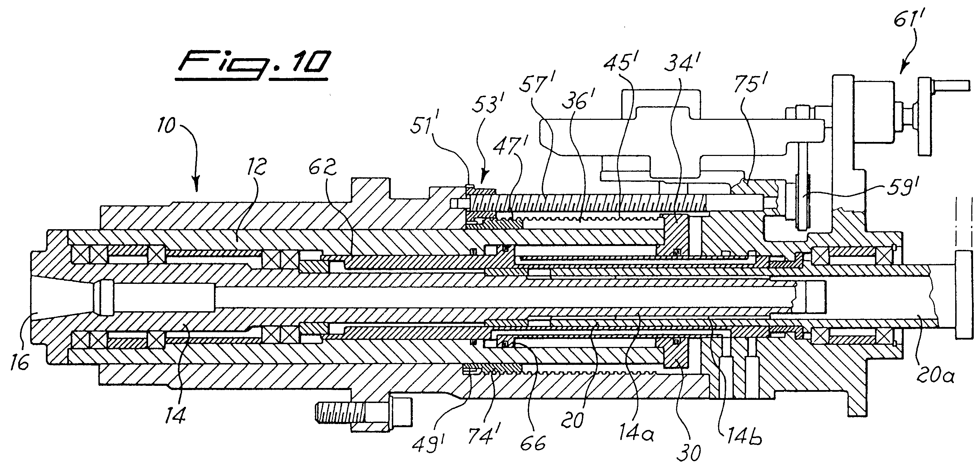

Figures 8 and 9 are views similar to Figures 4 and 6 with the spindle partially projecting from the hollow body.
Figure 10 is a schematic view, in longitudinal section of a modified embodiment of the unit according the present invention in the hydraulic version with the sleeve and thus, the spindle, are completely retracted with the hollow body;

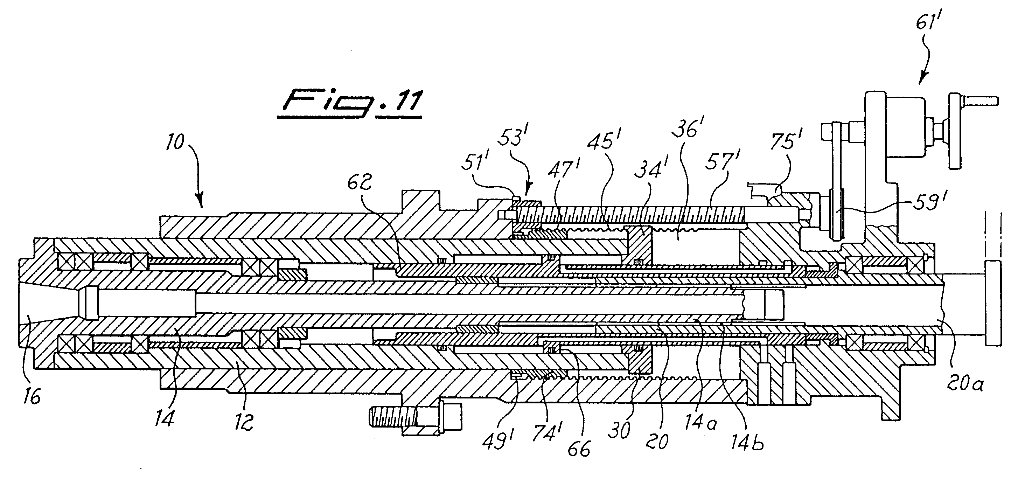

Figure 11 is a view similar to the figure 10 with the sleeve, and thus the spindle, partially projecting from the hollow body, and

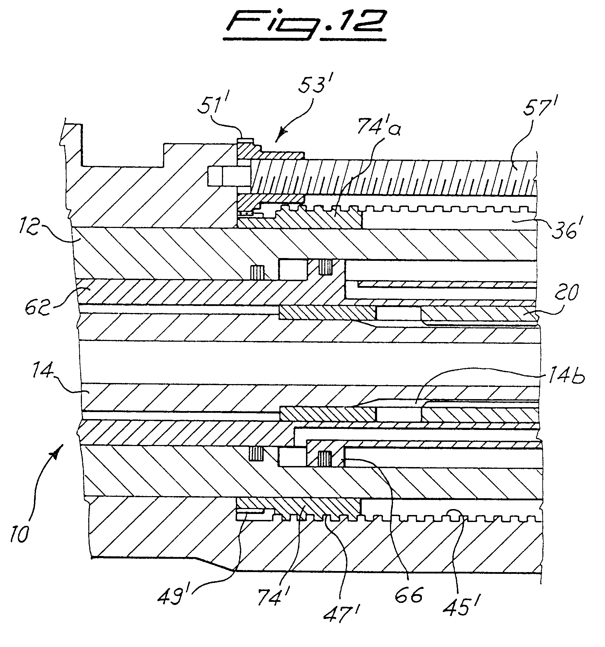

Figure 12 is a schematic view in enlarged scale and in longitudinal section of a particular of the unit according the figures 10 and 11.

With reference firstly to Figure 1, a description is given of the hollow body of the unit which, being the same for two types of unit, may reasonably be regarded as the "basic" body with which it is possible to construct both of the said units, i.e. either mechanic or hydraulic.

With reference to the abovementioned figure it can be seen that the "basic" hollow body of the unit according to the invention, denoted in its entirety by 10, has an essentially cylindrical shape and is open at both its ends. Solely for the sake of ease of reference and clarity of the definitions, it must be pointed out first of all that, in the entire present description, the terms "front" and "rear" of the unit or its components are understood as referring to the parts or portions of the same located respectively on the side where the tool is attached to the spindle of the unit and the opposite side.

Inside the body 10 there is housed, in an axially sliding manner, a sleeve 12, also having an essentially cylindrical shape, the length of which is slightly less than that of the body 10 and is guided inside the body itself over about two thirds of its length.

According to one of the main characteristic features of the unit according to the invention, the sleeve 12, in addition to having the aforementioned length, has an external diameter of a value such that, where guided, its lateral surface is entirely in contact with the internal surface of the body 10. This characteristic feature is undoubtedly of some importance since the sleeve 12 thus guided is stable during its axial displacements from the body 10 of the unit and is not subjected, during operation of the latter, to stresses which may in any way negatively affect the correctness of the aforementioned displacements, consequently increasing the precision and rigidity during the machining operations.

Inside the sleeve 12 there is arranged in a freely rotatable manner, but without the possibility of axial displacements, a spindle 14 on one end of which, projecting outside the body 10, there is mounted and locked in any known manner a conventional tool 16, shown partially and in diagrammatic form, for machining a workpiece not shown. Rotation of the spindle 14 is permitted, while its axial movements are prevented owing to the provision of thrust bearings 18 located between the spindle 14 and the sleeve 12.

The rear part 14a of the spindle is supported in a rigidly rotatable manner and with the possibility of axial sliding and to this end is inserted inside support means in the form of a splined shaft 20 supported in a freely rotatable manner by the body 10, but without the possiblity of axial displacements owing to the interposition of thrust bearings 22. The rear end 20a of the shaft 20 projects outside the body 10 and on it, as can be seen from Figure 4, there is mounted a toothed pulley 24 connected, via a toothed belt 26, to a drive motor 28 which causes rotation of the splined shaft 20. Rotation of the splined shaft 20 via the drive motor 28 may also be obtained using other movement transmission systems, not shown, such as for example gear reduction transmissions or gear units. Since the rear part 14a of the spindle 14 has a series of longitudinal ribs 14b which engage in the grooves of the shaft 20, rotation of the latter involves that of the spindle 14 which simultaneously is able to move axially with respect to said shaft.

A collar 30 with a substantially annular shape is mounted at the rear end of the sleeve 12, inside the latter, as can be seen also in Figures 5 and 7. More particularly, the collar 30 is coaxial with the shaft 20 and between it and the said shaft there is left an empty space with a height of a predetermined and constant value, the significance of which will become clear below. On the surface of the collar 30 opposite the shaft 20 there is formed a perimetral groove 32, the purpose of which will also become clear below.

The collar 30 is provided with a pair of lugs 34 formed as one piece with said collar and arranged at 180° with respect to each other. Each of the lugs 34 projects outside the sleeve 12 and the hollow body 10 via a longitudinal slit 36 in the latter, as can be seen in particular again from Figures 5 and 7 in addition to Figure 1, this lug 34 having an essentially parallelepiped shape. More precisely, as can be seen more clearly from Figures 5 and 7, the width of the lugs 34 is slightly less than that of the slits 36 and this has the purpose of allowing the said lugs to slide freely in the slits 36 without transverse oscillations, preventing in this way rotation of the collar 30 and hence of the sleeve 12 rigid therewith. The sleeve 12, in fact, as moreover is already envisaged in conventional units, must only slide inside the hollow body 10, but must not under any circumstances rotate relative thereto.

As can be seen more clearly from Figure 1, the sleeve 12 has internally an annular shoulder 31, located axially opposite the collar 30 and arranged at a distance from the latter substantially equal to the length of the slits 36. Between the shoulder 31 and the spindle 14 coaxial therewith there is also left an empty space, the height of which is equal to that of the empty space between the collar 30 and the splined shaft 20. In fact, the radial thickness of the collar 30 has the same value as that of the shoulder 31.

The body 10 has, laterally with respect to the collar 30 and more precisely on the opposite side to the sleeve 12, an annular cavity 38 coaxial with the splined shaft 20 and, adjacent to the latter, an additional annular cavity 40 also coaxial with the shaft 20. This second annular cavity 40 communicates with the exterior of the body 10 via a radial passage 42 in the latter.

In the wall of the hollow body 10, opposite the first annular cavity 38, there is formed a pair of ducts 44 and 44a which link said cavity 38 with the exterior of the body 10.

As can be seen in particular again in Figure 1, the external surface of the body has a thread with a square cross-section 45 which extends, in the example of embodiment considered, from the rear end of the slits 36 as far as about halfway along the front portion of the body 10.

If we now consider Figure 2, we can see a known screw/nut assembly, denoted in its entirety by 48, which can be applied to the "basic" body 10 of Figure 1, as illustrated in Figure 4, for the realisation of the unit according to the invention, as explained in detail hereinbelow. It is an obvious consideration that, in this case, the unit is a mechanically operated unit.

The screw 50 of the screw/nut assembly 48 is hollow longitudinally and open at the ends and it is mounted coaxially with respect to the spindle 14 and the splined shaft 20 about which it is made to rotate through the action of a drive motor 52 connected, via a toothed belt 54, to a toothed pulley 56 keyed onto one of its ends.

At the same end there is arranged a pair of thrust bearings 58 which, by cooperating with shoulders of the body 10, enable rotations of the screw 50 to be effected, preventing axial displacements thereof with respect to the said body. The bearings 58 and the toothed pulley 56 are housed in the cavities 38 and 40, respectively, of the body 10.

The rotations of the screw 50 are permitted both in that its internal diameter is greater than the external diameter of the spindle 14 and the splined shaft 20 and since its external diameter is less than the internal diameter of the collar 30 and the internal shoulder 31 of the sleeve 12.

As can be seen from Figure 4, the nut 60, and more precisely its contour, is housed in the annular seat 33 defined by the collar 30, the shoulder 31 of the sleeve 12 and the wall of the latter lying between them. Moreover, it must be locked in position during the rotations, being required to move only axially and this may be easily obtained for example by fixing its rear edge in any known manner (not shown) to the collar 30. In this way its axial displacements are transmitted integrally to the sleeve 12 and hence to the spindle 14.

If we now consider Figure 3, the latter shows a stem 62 of a double-acting hydraulic piston which can be applied to the "basic" body 10 of Figure 1, as illustrated in Figure 6, for realisation of the unit according to the invention, as explained in detail hereinbelow. It is an obvious consideration that, in this case, the unit is a hydraulically operated unit.

The stem 62 is hollow longitudinally and open at the ends and it is mounted coaxially with respect to the spindle 14 and the splined shaft 20, and between its internal surface and said components there exists a certain degree of play so as to allow both rotations of the latter and axial displacements of the spindle 14.

The stem 62 is fixed at its rear end to the contour 63 of the opening formed on one of the walls of the additional annular cavity 40 for the passage of the splined shaft 20.

Locking is performed by means of a ring nut 64 which is screwed onto said threaded end of the stem 62, engaging with the aforementioned contour 63. The stem 62 is therefore stationary with respect to the "basic" body 10.

According to one of the most significant characteristic features of the unit according to the invention, the double-acting hydraulic piston which effects the axial displacements of the sleeve 12 has, as the cylinder which cooperates with the stem 62, the assembly consisting of the sleeve 12 itself, the collar 30, in the groove 32 of which a seal 32a is mounted, and the internal annular shoulder 31 of the body 10, between which and the body of the stem 62 a seal 31a is mounted.

The middle annular projection 66 with which the stem 62 is provided and on which a seal 68 is mounted, is arranged in the annular seat 33 defined by the collar 30, the shoulder 31 of the sleeve 12 and the wall of the latter lying between them.

Part of this seat therefore forms one of the two chambers of the double-acting piston, while the second one is formed on the opposite side of the projection 66 of the stem 62 when the sleeve 12 is made to emerge from the body 10 such that its shoulder 31 moves away from the aforementioned projection 66, as explained and stated hereinbelow with specific reference to Figures 6 and 9.

As can be appreciated more particuarly from Figure 6 when the sleeve 12 is completely retracted inside the body 10, i.e. when its lugs 34 come up against fixed stops 70 of the latter, the shoulder 31 is slightly separated from the projection 66 of the stem 62 and in this case it is possible to introduce a pressurised fluid, for example oil, into the annular space between said two components via a longitudinal duct 72 formed in the body itself of the stem 62 and connected, via the duct 44, to a source supplying said pressurised fluid, known per se and not shown.

Since the stem 62 is stationary, the aforementioned supply of pressurised oil causes a displacement of the sleeve 12 which starts to emerge, together with the spindle 14, from the body 10 until it reaches the desired position, for example the partially projecting position shown in Figure 9. Stoppage of the sleeve 12 in this or another predetermined position is determined by the engagement of the lugs 34 of the collar 30 with stopping means adjustable manually or automatically via a motor and transmissions not shown, which, in the embodiment considered, consist of two portions 74a of an annular ring-nut 74 which is screwed onto the threading 45 of the body 10, more precisely of two portions thereof arranged transversely with respect to the two slits 36. The ring nut 74 is provided with locking means which keep it in the required position, such as for example locking screws or the like not shown. According to the machining requirements, therefore, it is possible to adjust the amount of travel which the sleeve 12 must perform. The supply of pressurised fluid is then maintained for the entire duration necessary for the machining operation which the tool 16 must perform, so that the spindle 14 which holds it is not subject to any unwanted movements.

At the end of the machining operation, retraction of the spindle 14 and hence of the sleeve 12 must obviously be performed. At this point, it is sufficient to interrupt the supply of the pressurised fluid through the ducts 44 and 72 and ensure the said supply on the opposite side of the projection 66 of the stem 62 through a longitudinal duct 76 also formed in the body thereof and communicating with the duct 44a. In this case, said fluid exerts an axial thrust on the collar 30, causing retraction thereof and hence retraction of the sleeve 12 rigid therewith. The unit is ready to perform the next machining operation.

The mode of operation of the unit of the mechanical type is substantially similar in that the amount of the displacements performed by the sleeve 12, such as for example that from the completely retracted position of Figure 4 to the partially projecting position of Figure 8, will be determined by the activation time of the motor 52 which effects rotations of the screw 50 and hence forward movement of the screw 60. In this case no means are provided for stopping the forward movements of the sleeve 12 in that it is stoppage of the aforementioned motor 52 which keeps it in the desired position.

Retraction of the sleeve 12 is then obtained by reversing the direction of rotation of the motor 52 until the lugs 34 of the collar 30 reassume their starting position. In this position the motor 28 which effects the rotations of the screw 50 is de-energised.

From the above description it is obvious, without the need for any further comment, that the "basic" body 10 of the unit according to the invention as described in detail further above, with particular reference to Figure 1, may be used, without any modification, for the realisation both of a mechanically operated unit and a hydraulically operated unit. In fact, the aforementioned body, as we have seen, is able to house indifferently, for effecting the axial displacements of the sleeve 12, both a screw/nut assembly of the type shown in Figure 2, as illustrated in Figures 4, 5 and 8, and a stem of the type shown in Figure 3, as illustrated in Figures 6, 7 and 9.

As a result of this substantial characteristic feature of "interchangeability" of the "basic" body, it is possible to achieve simultaneously all the aims stated in the introductory part of the present description, with the obvious advantages resulting therefrom.

According to another particularly advantageous feature of the unit according to the invention, said unit is provided with means for effecting locking to frame of the machine, enabling fixing thereof in an adjustable position. With particular reference to Figure 1, but considering also Figures 4 and 6, these means comprise an annular elastic clamp 78 which is screwed onto the square threading 45 and is positioned in the zone where it is required to arrange the aforementioned locking means consisting of a series of bolts 80, only one of which is visible in the abovementioned Figures and which are inserted into the holes of a flange 82 which surrounds the clamp 78.

Between the flange 82 with a conical central hole and the clamp 78 there are located wedges 84 which angularly position the flange 82 with the clamp 78. A locking ring 86, by axially displacing the external conical clamp 78, causes at the same time locking of the flange 82 to the conical clamp 78 and locking of the conical clamp 78 onto the square thread 45.

According to another particularly advantageous feature of the unit according to the invention, more precisely the hydraulically operated unit, said unit is provided with means for automatic programming of its operation, for example of the type with an encoder or microswitches. The latter, denoted by 88 in Figure 7, are arranged axially with respect to the body 10 on a first board 90 fixed to the body 10. A series of cams 94 which cooperate with the microswitches 88 are arranged on a second board 92. The cams 94 are suitably offset with respect to one another, according to the desired operating program, in such a way that, during the displacements of the lug 34, and hence those of the board 92, they engage with the various microswitches 88 in the desired sequence, activating the various functions of the hydraulic circuit (known and not shown) which supplies the actuating piston of the unit.

With particular reference now to Figures 10 to 12, another embodiment of the unit according to the present invention is described.

This embodiment also has the main characteristic feature of the first embodiment according to which, using the same "basic" hollow body, it can be realised both in the hydraulic version in which a hydraulic piston effects the displacements of the known "sleeve" with which the tool-carrying spindle is rigid, and in the mechanical version in which the displacements of the aforementioned component are effected by a nut/screw assembly. In this connection, the construction of the embodiment in question of the unit according to the invention, in its general configuration, is entirely similar structurally to the first embodiment; therefore, reference should be made to the description of the latter, as regards the common parts of the two embodiments.

The constructional features of this unit according to the present invention relates to an improvement of the "basic" body of the said unit, as will be clarified below during the detailed description thereof, which highlights the main features of this improvement and the further advantages which can be achieved thereby. It is obvious, however, that the "basic" body of the first embodiment may also have the same improvement, even though this has not been explicitly envisaged previously and hence has not been described in detail.

As was seen from the description and drawings of the first embodiment of the unit according to the invention, the forward movement of the spindle is adjusted by displacing, on the body of the unit, a suitable abutment against which two diametral lugs rigid with the sleeve come to rest. These lugs slide in slits of the "basic" body from which they project outside of the latter and it is their projecting portion which engages with the aforementioned abutment consisting of an annular ring-nut which is screwed on the outside of the "basic" body.

This solution has proved simple and reliable for the adjustment in question, but it was thought that, by exploiting the same innovative idea, it could be improved so as to achieve further advantages in addition to those already provided by said solution.

It has been found in fact that the external threading on which the ring nut is screwed may be subject to contamination in general in view of the particular environment in which the unit operates.

The above drawback, particularly in the case of continuous use of the unit, also involves oxidation phenomena affecting the aforementioned threading.

The threading in question therefore constitutes a delicate part of the unit owing to the possibility of being subject to damage which may occur in particular during transportation and/or assembly of the unit. The use of protective coverings has not proved successful since they either are too bulky if complete or inadequate if constructed with smaller dimensions.

The improvement referred to below has therefore been devised, said improvement in particular enabling the abovementioned problems of contamination and wear, as well those relating to possible damage, to be eliminated. Moreover, on account of the particular design of the "basic" body, it is possible to fit a protective covering of small dimensions.

According to one of the characteristic features of the modified embodiment of the unit according to the invention, the collar rigid with the sleeve is provided with single radial lug, the height of which is of a value such that its volume is contained within the hollow body of the unit. Furthermore, the abutment ring-nut, which is also present as in the first embodiment, is arranged inside the said hollow body and its external surface has a thread which engages with a corresponding internal thread of the hollow body as well as a toothed portion which engages with a corresponding toothed portion of means for effecting rotations thereof on the body of the sleeve.

It must also be mentioned that, as regards this embodiment of the unit according to the invention, it has been considered necessary to illustrate and describe only the hydraulic version thereof since this version is the most significant and complete for the purposes of said variant. In fact, it contains all the novel elements of the innovation, including the ring nut, which is not envisaged - since it is not necessary - in the mechanical version. It therefore can be easily understood how the description of the variant of the hydraulic version of the unit facilitates understanding of the mechanical version.

Solely for the sake of ease of reference, in the present description of the modified embodiment in question, for the components which distinguish said it from the first embodiment, the same reference numbers as those of the corresponding components in the latter have been used, but with an apostrophe added so that they can be differentiated from one another.

With particular reference to the figures 10 and 11 at the rear end of the sleeve 12 and inside the latter there is rigidly mounted a collar 30 having a substantially annular shape, coaxial with the body of the stem 62. The collar 30 is provided with a only lug 34' formed as one piece with said collar 30.

As can be seen from said figures, the lug 34' has a height such that its volume is contained inside the hollow body 10 of the unit and it is arranged in a slidable manner in a longitudinal slit 36' of the hollow body 10 when the sleeve 12 is displaced axially.

The lug 34' of the collar 30 is designed to engage with adjustable-position stoppage and abutment means which, in the embodiment considered, consist of a portion 74a', passing through the slit 36', of an annular ring-nut 74' arranged inside the hollow body 10, coaxial with the body of the sleeve 12 with the possibility of rotation and longitudinal sliding on the latter, as can be understood more clearly from an examination of Figure 12.

The external surface of the ring nut 74' has a thread 47' which engages with a corresponding internal thread 45' of the hollow body 10 so as to effect, by means of screwing, the translatory movements of said ring nut 74' with respect to the sleeve 12.

Screwing of the ring nut 74' is obtained by causing it to rotate and, for this purpose, it has, adjacent to the thread 47', a toothed annular portion 49' with a height less than the threaded part 47' which engages with a corresponding toothed portion 51' of means for effecting rotation thereof on the body of the sleeve 12, said means being denoted in their entirety by 53'.

The actuating means 53' comprise the aforementioned toothed portion 51' consisting of a gear in constant engagement with the toothed annular portion 49' of the ring nut 74'. Coupling of said toothed portions 49' and 51' is performed in any known manner so as to allow transmission of the rotational movement between the two portions, at the same time preventing relative transverse displacements of the latter.

In this way it is ensured that the gear 51' constantly follows the ring nut 74' during its rectilinear movements.

The gear 51' is mounted in a screwable manner onto a threaded shaft 57' which extends longitudinally with respect to the hollow body 10 and is partially inserted inside the slit 36' of the latter. Moreover, the shaft 57' is supported in a freely rotatable manner by a bracket 75' of the hollow body 10.

The shaft 57' is connected at one of its ends, via a toothed belt 59' to known means 61' for effecting rotation thereof in a clockwise or anti-clockwise direction, depending on the desired direction of rotation and hence displacement of the ring nut 74', which is brought into the desired position of abutment with the lug 34' for engagement therewith and, consequently for stoppage of the forward movement of the sleeve 12.

Depending on the machining requirements it is therefore possible to adjust the amount of travel which the sleeve 12 must perform in order to emerge from the hollow body 10 as, for example, illustrated in Figure 11. The supply of the fluid under pressure, for the travel of the sleeve 12 is made as in the first embodiment.

Finally, it is obvious that structurally and conceptually equivalent variants and/or modifications may be made to the machining unit for an automatic machine-tool according to the present invention, without thereby departing from the scope thereof.

## Claims

1. Machining unit for an automatic machine-tool, of the type comprising a hollow body (10) designed to be fixed to the frame of the machine-tool via locking means with which it is provided, a tool-carrying spindle (14) arranged inside said hollow body (10) and housed in a freely rotatable manner without the possibility of axial sliding inside a sleeve (12) in turn axially sliding inside said hollow body 10, said spindle (14) projecting from the hollow body (10) at one end or front end so as to receive and hold a tool (16) to be operated, while at the other end or rear end 14a it is supported in a rigidly rotatable manner and with the possibility of axial sliding by support means (20) which are made to rotate by actuating means (28) connected thereto, the axial dispacements of the spindle in (14) being performed together with those of said sleeve (12) by actuating means cooperating with the latter, characterized in that at the rear end of the sleeve (12) there is fixed an essentially annular internal collar (30), coaxial with said support means (20) for supporting the rear end (14a) of the spindle (14) and having a diameter greater than that of said support means, there being located axially opposite said collar (30) an internal shoulder (31) of the sleeve (12) which is also essentially annular, coaxial with respect to the spindle (14) and having a greater diameter than the latter, said collar (30) being provided with at least one radial lug (34, 34') sliding in a longitudinal slit (36, 36') of the same when the sleeve (12) is displaced axially, at the rear of the aforementioned collar (30) there being provided, inside the hollow body (10), an essentially annular cavity (38) communicating with the exterior of the same via a pair of ducts (44, 44a) formed in the wall of said hollow body (10) for supplying and discharging a fluid under pressure,
the opposing walls of said collar (30) and said internal shoulder (31) of the sleeve (12) having substantially the same height or radial thickness and defining, together with the internal wall of the sleeve (12) lying between them, a substantially annular seat (33), further comprising an additional annular cavity (40), adjacent to the annular cavity (38) at the rear of the collar (30), and provided with an opening (42) which places it in communication with the exterior of the hollow body (10), said end being fixed in a sealed manner via a ring nut (64) to the contour of the passage of a wall of said additional annular cavity (40) through which the rear end (14a) of the spindle (14) and its support means (20) pass.

2. Machining unit according to claim 1, characterized in that said collar (30) is provided with at least two radial lugs (34) arranged substantially at 180° from one another projecting from said hollow body (10) and each sliding in a longitudinal slit (36) of the same.

3. Machining unit according to claim 1, in which said actuating means for effecting the axial displacements of the sleeve are of the hydraulic type, such as a hydraulic piston or the like, characterized in that said piston is double-acting and comprises a stem (62) fixed inside said hollow body (10) coaxially with said spindle (14) and with the means (20) for supporting its rear end (14a), the cylinder of which consists of the sleeve (12), the end walls of said cylinder being formed by said collar (30) and by said internal shoulder (31) of the sleeve (12) located opposite thereto.

4. Machining unit according to Claim 3, characterized in that the first of the two chambers of said double-acting piston is formed by part of said annular seat (33) and its end walls are formed by said collar (30) and by a middle annular projection (66) of said stem (62).

5. Machining unit according to Claim 4, characterized in that, when the sleeve 12 is completely retracted inside the said hollow body (10), between its internal shoulder (31) and said middle annular projection (66) of the stem (62), there exists a slight separation which allows the introduction, into the annular space defined by them, of a fluid under pressure, so as to cause said internal shoulder (31) of the sleeve (12) to move away from said middle annular projection (66) of the stem (62) and hence the sleeve (12) to emerge from the hollow body (10) by the required amount, this displacement of the sleeve (12) giving rise to the formation of the second double-acting piston chamber.

6. Machining unit according to Claim 5, characterized in that the introduction of fluid under pressure into the annular space existing between said internal shoulder (31) of the sleeve (12) and said middle annular projection (66) of the stem (62) of the piston occurs via a duct (72) formed in the body itself of its stem (62), which communicates with one of the ducts (44, 44a) formed in the wall of the hollow body (10).

7. Machining unit according to Claim 4, characterized in that the introduction of fluid under pressure into said first chamber of the double-acting piston occurs via an additional duct (76), also formed in the body itself of its stem (62), which communicates with the other of the ducts (44, 44a) formed in the wall of the hollow body (10), the introduction of fluid under pressure into said first chamber causing retraction of the collar (30) towards fixed abutments (70) of the hollow body (10) and hence retraction of the sleeve (12) inside the latter.

8. Machining unit according to Claim 3, characterized in that one end of said stem (62) of the double-acting piston projects inside said additional annular cavity (40).

9. Machining unit according to Claim 3, characterized in that said double-acting piston is arranged in a retracted position wih respect to the end of the hollow body (10) from which the spindle (14) emerges.

10. Machining unit according to Claim 1, in which said means for effecting the displacements of the sleeve are of the mechanical type, such as a screw (50)/nut (60) assembly, characterized in that the substantially annular seat (33) defined by the opposing walls of said collar (30) rigid with the sleeve (12) and said internal projection (31) of the latter houses the nut (60) of said screw (50)/nut (60) assembly wherein rotations of the screw (50), which is axially stationary with respect to said hollow body (10), effect in a known manner axial displacements of the nut (60) and hence of the sleeve (12).

11. Machining unit according to Claims 8 and 10, characterized in that said additional annular cavity (40) adjacent to the cavity (38) at the rear of said collar (30) rigid with the sleeve (12) houses the end of the screw (50) on which there is keyed a toothed wheel (56) for connecting it to means (52) for effecting rotation thereof.

12. Machining unit according to Claim 1, characterized in that, transversely with respect to each slit (36) in which said lugs (34) of the collar (30) rigid with the sleeve (12) slide, there is mounted an adjustable-position stop (74a) with which one of said lugs (34) engages.

13. Machining unit according to Claim 12, characterized in that said stop (74a) consists of a portion of a substantially annular ring-nut (74) mounted on said hollow body (10).

14. Machining unit according to Claim 13, characterized in that the ring nut (74) is displaceable by means of screwing on the hollow body (10) and is provided with means for locking it when it has been arranged in the required position.

15. Machining unit according to Claim 12, characterized in that the width of said lugs (34) of the collar (30) is slightly less than that of the slits (36) in which they slide.

16. Machining unit according to Claim 1, characterized in that the means for locking the hollow body to the frame of the machine-tool are arranged on a external annular conical clamp (78) which can be fixed in an adjustable position on the hollow body (10).

17. Machining unit according to Claim 1, characterized in that said sleeve (12) is guided during its translatory movements, over its entire length, by the internal wall of the said hollow body (10), the entire lateral surface of the sleeve (12) being in contact with that of said wall.

18. Machining unit according to claim 1, characterized in that said at least one lug (34') is of a height such that its volume is contained inside the said hollow body (10) of the unit, an abutment ring (74') against which said lug (34') engages being arranged inside the said hollow body (10), coaxial with the body of the sleeve (12) with the possibility of rotation and longitudinal sliding on the latter, its external surface having a thread (47') which engages with a corresponding internal thread (45') of the said hollow body (10) so as to effect, by means of screwing, the translatory movements thereof with respect to the sleeve (12), as well as a toothed portion (49') which engages with a corresponding toothed portion (51') of means (53') for effecting rotation thereof on the body of the sleeve (12.)

19. Machining unit according to Claim 18, characterized in that the toothed portion (51') of the means (53') for effecting the rotations of the ring nut (74') consists of a gear in constant engagement with the toothed annular portion (49') of the ring nut (74'), coupling of said toothed portions (49') and (51') being achieved so as to allow transmission of the rotational movement between the two portions, preventing at the same time relative transverse displacements of the latter so that the gear (51') constantly follows the ring nut (74') during its rectilinear movements.

20. Machining unit according to Claim 18, characterized in that the toothed annular portion (49') of the ring nut (74') has a height less than that of its threaded part (47').

21. Machining unit according to Claim 19, characterized in that the gear (51') is mounted in a screwable manner onto a threaded shaft (57') which extends longitudinally with respect to the hollow body (10) of the unit and is partially inserted in the slit (36') of the latter, the shaft (57'), supported in a freely rotatable manner by at least one bracket (75') of the hollow body (10), being connected at one of its ends to known means (61') for effecting clockwise or anti-clockwise rotation thereof, depending on the desired direction of rotation and hence displacement of the ring nut (74').

22. Machining unit according to claim 1, characterized in that said support mean (20) are a splined shaft forming a housing for supporting the rear end (14a) of the spindle (14), the connection being obtained by means of longitudinal ribs (14b) formed onto the outer surface of the spindle (14) engaging grooves internally formed in the splined shaft (20).

## Patentansprüche

1. Bearbeitungseinheit für eine Automatik-Werkzeugzeugmaschine der Art, umfassend einen Hohlkörper (10), der über ein daran vorhandenes Verriegelungsmittel am Rahmen der Werkzeugzeugmaschine befestigbar ist, eine Werkzeug-tragende Spindel (14), die im Hohlkörper (10) angeordnet und ohne die Möglichkeit einer axialen Verschiebbarkeit frei drehbar in einer Hülse (12) untergebracht ist, die wiederum im Hohlkörper (10) axial verschieblich ist, wobei die Spindel (14) an einem Ende oder Vorderende vom Hohlkörper (10) vorsteht, um so ein zu betreibendes Werkzeug (16) aufzunehmen und zu halten, während sie am anderen Ende oder Hinterende (14a) in starr drehbarer Weise und axial verschieblich durch Stützmittel (20) gehalten wird, die durch hiermit verbundene Betätigungsmittel (28) drehbar sind, wobei die Axialverschiebungen der Spindel (14) zusammen mit denen der Hülse (12) durch mit der Hülse zusammenwirkende Betätigungsmittel ausgeführt werden, dadurch gekennzeichnet, daß am Hinterende der Hülse (12) ein im wesentlichen ringförmiger Innenkragen (30) koaxial mit den Stützmitteln (20) zum Halten des Hinterendes (14a) der Spindel (14) befestigt ist und einen Durchmesser hat, der größer ist als der des Stützmittels, wobei axial gegenüberliegend dem Kragen (30) eine Innenschulter (31) der Hülse (12) plaziert ist, die auch im wesentlichen ringförmig, koaxial zur Spindel (14) ist und einen größeren Durchmesser hat als die Spindel, wobei der Kragen (30) mit zumindest einer radialen Nase (34, 34') versehen ist, die, wenn die Hülse (12) axial verschoben wird, in einem längsgerichteten Schlitz (36, 36') derselben gleitet, wobei am hinteren Teil des genannten Kragens (30) im Hohlkörper (10) ein im wesentlichen ringförmiger Hohlraum (38) vorhanden ist, der mit der Außenseite desselben über ein Paar Kanäle (44, 44a), die in der Wandung des Hohlkörpers (10) ausgebildet sind, zum Zuführen und Ausbringen eines unter Druck stehenden Fluids in Verbindung steht, wobei die gegenüberliegenden Wände des Kragens (30) und der Innenschulter (31) der Hülse (12) im wesentlichen die gleiche Höhe oder radiale Dicke haben und zusammen mit der dazwischen liegenden Innenwandung der Hülse (12) einen im wesentlichen ringförmigen Sitz (33) definieren, ferner umfassend einen zusätzlichen ringförmigen Hohlraum (40), der an der Rückseite des Kragens benachbart des ringförmigen Hohlraums (38) liegt und mit einer Öffnung (42) versehen ist, die ihn mit der Außenseite des Hohlkörpers (10) in Verbindung setzt, wobei das Ende über eine Ringmutter (64) an die Kontour des Durchgangs einer Wand des zusätzlichen ringförmigen Hohlraums (40), durch den das Hinterende (14a) der Spindel (14) und deren Stützmittel (20) hindurchgehen, abgedichtet befestigt ist.

2. Bearbeitungseinheit nach Anspruch 1, dadurch gekennzeichnet, daß der Kragen (30) mit zumindest zwei Nasen (34) versehen ist, die im wesentlichen 180° zueinander versetzt angeordnet sind, vom Hohlkörper (10) vorstehen und jede in einem längsgerichteten Schlitz (36) desselben gleitet.

3. Bearbeitungseinheit nach Anspruch 1, in der die Betätigungsmittel zum Bewirken axialer Verschiebungen der Hülse hydraulischer Art sind, wie beispielsweise ein Hydraulikkolben oder dergleichen, dadurch gekennzichnet, daß der Kolben doppeltwirkend ist und eine Stange (62) umfaßt, der im Hohlkörper koaxial mit der Spindel (14) und mit den Mitteln (20) zum Stützen von deren Hinterende (14a) angebracht ist, wobei dessen Zylinder aus einer Hülse (12) besteht, die Stirnwände des Zylinders durch den Kragen (30) und durch die hierzu gegenüberliegende Innenschulter (31) der Hülse (12) gebildet ist.

4. Bearbeitungseinheit nach Anspruch 3, dadurch gekennzeichnet, daß die erste der zwei Kammern des doppeltwirkenden Kolbens durch einen Teil des ringförmigen Sitzes (33) gebildet ist und deren Stirnwände durch den Kragen (30) und durch einen mittleren ringförmigen Vorsprung (66) der Stange (62) gebildet ist.

5. Bearbeitungseinheit nach Anspruch 4, dadurch gekennzeichnet, daß, wenn die Hülse (12) vollständig im Hohlkörper (10) zwischen deren Innenschulter (31) und dem mittleren Vorsprung (66) der Stange (62) eingezogen ist, eine geringfügige Trennung besteht, die in den durch diese Elemente definierten ringförmigen Zwischenraum die Einführung eines unter Druck stehenden Fluids erlaubt, um so die Innenschulter (31) der Hülse (12) vom mittleren Vorsprung (66) der Stange (62) wegzubewegen und folglich die Hülse (12) vom Hohlkörper (10) um den erforderlichen Betrag hervorzufahren, wobei diese Verschiebung der Hülse (12) die Bildung der zweiten Kammer des doppeltwirkenden Kolbens bewirkt.

6. Bearbeitungseinheit nach Anspruch 5, dadurch gekennzeichnet, daß die Einbringung des unter Druck stehenden Fluids in den zwischen der Innenschulter (31) der Hülse (12) und dem mittleren Vorsprung (66) der Stange (62) des Kolbens über einen Kanal (72) erfolgt, der in der Stange selbst ausgebildet ist und mit einem der in der Wand des Hohlkörpers ausgebildeten Kanäle (44, 44a) in Verbindung steht.

7. Bearbeitungseinheit nach Anspruch 4, dadurch gekennzeichnet, daß die Einbringung des unter Druck stehenden Fluids in die erste Kammer des doppeltwirkenden Kolbens über einen zusätzlichen Kanal (76) erfolgt, der in der Stange (62) selbst ausgebildet ist und mit den anderen in der Wand des Hohlkörpers (10) ausgebildeten Kanälen (44, 44a) in Verbindung steht, wobei die Einbringung des unter Druck stehenden Fluids in die erste Kammer das Zurückziehen des Kragens (30) hin zu feststehenden Anstoßflächen (70) des Hohlkörpers (10) bewirkt, und folglich das Zurückziehen der Hülse (12) in den Hohlkörper.

8. Bearbeitungseinheit nach Anspruch 3, dadurch gekennzeichnet, daß ein Ende der Stange (62) des doppeltwirkenden Kolbens in den zusätzlichen ringförmigen Hohlraum (40) vorsteht.

9. Bearbeitungseinheit nach Anspruch 3, dadurch gekennzeichnet, daß der doppeltwirkende Kolben in einer eingezogenen Stellung bezüglich dem Ende des Hohlkörpers (10) angeordnet ist, von dem die Spindel (14) austritt.

10. Bearbeitungseinheit nach Anspruch 1, bei der die Mittel zum Bewirken der Verschiebung der Hülse mechanischer Art sind, wie beispielsweise eine Schraube (50)/Mutter (60)-Anordnung, dadurch gekennzeichnet, daß der im wesentlichen ringförmige Sitz (33), der durch die gegenüberliegenden Wände des starr mit der Hülse ausgebildeten Kragens (30) und dem Innenvorsprung (31) des Hülse definiert ist, die Mutter (60) der Schrauben (50)/Mutter (60)-Anordnung aufnimmt, wobei die Drehung der Schraube (50), die bezüglich dem Hohlkörper axial stationär ist, in bekannter Weise axiale Verschiebungen der Mutter (60) bewirkt, und folglich der Hülse (12).

11. Bearbeitungseinheit nach Anspruch 8 oder 10, dadurch gekennzeichnet, daß der zusätzliche ringförmige Hohlraum (40), der benachbart zum Hohlraum (38) am Hinterende des starr mit der Hülse ausgebildeten Kragens (30) liegt, das Ende der Schraube (50) aufnimmt, an dem ein gezahntes Rad (56) mittels einer Keilverbindung angebracht ist, um es mit Mitteln (52) zu dessen Drehung zu verbinden.

12. Bearbeitungseinheit nach Anspruch 1, dadurch gekennzeichnet, daß quer zu jedem Schlitz (36), in denen die Nasen (34) des mit der Hülse (12) starr ausgebildeten Kragens (30) gleiten, ein positionseinstellbarer Anschlag (74a) angebracht ist, mit dem eine der Nasen (34) in Eingriff gelangt.

13. Bearbeitungseinheit nach Anspruch 12, dadurch gekennzeichnet, daß der Anschlag (74a) aus einem Abschnitt einer im wesentlichen ringförmigen Ringmutter (74) besteht, die auf dem Hohlkörper angebracht ist.

14. Bearbeitungseinheit nach Anspruch 13, dadurch gekennzeichnet, daß die Ringmutter (74) durch Verschrauben auf dem Hohlkörper (10) verschiebbar ist und mit Mitteln zum Feststellen versehen ist, wenn sie in die verlangte Position angeordnet wurde.

15. Bearbeitungseinheit nach Anspruch 12, dadurch gekennzeichnet, daß die Breite der Nasen (34) des Kragens (30) geringfügig schmäler ist als die der Schlitze (36), in denen sie gleiten.

16. Bearbeitungseinheit nach Anspruch 1, dadurch gekennzeichnet, daß die Mittel zum Verriegeln des Hohlkörpers am Rahmen der Werkzeugmaschine an einer äußeren ringförmigen, konischen Klemme (78) angeordnet sind, die in einer einstellbaren Position am Hohlkörper (10) befestigt werden kann.

17. Bearbeitungseinheit nach Anspruch 1, dadurch gekennzeichnet, daß die Hülse (12) während ihrer translatorischen Bewegungen über ihre gesamte Länge durch die Innenwandung des Hohlkörpers (10) geführt ist, wobei die gesamte Seitenfläche der Hülse (12) mit der Wandung in Berührung ist.

18. Bearbeitungseinheit nach Anspruch 1, dadurch gekennzeichnet, daß zumindest eine Nase (34') eine solche Höhe hat, daß ihr Volumen innerhalb des Hohlkörpers (10) der Einheit aufgenommen ist, wobei ein Anlagering (74'), mit dem die Nase (34) in Anlage gelangt, im Hohlkörper koaxial mit dem Körper der Hülse (12) drehbar und auf der letzteren längs verschiebbar angeordnet ist, wobei dessen Außenfläche ein Gewinde (47') aufweist, das mit einem entsprechenden Innengewinde (45') des Hohlkörpers (10) in Eingriff ist, um so durch Verschrauben deren translatorische Bewegungen bezüglich der Hülse (12) zu bewirken, wie auch einen gezahnten Abschnitt (49'), der mit einem entsprechend gezahnten Abschnitt (51') von Miiteln (53') zum Bewirken dessen Drehung auf dem Körper der Hülse (12) in Eingriff ist.

19. Bearbeitungseinheit nach Anspruch 18, dadurch gekennzeichnet, daß der gezahnte Abschnitt (51') der Mittel (53') zum Bewirken der Drehung der Ringmutter (74') aus einem Zahnrad besteht, das mit dem gezahnten ringförmigen Abschnitt (49') der Ringmutter (74') in konstantem Eingriff ist, wobei das Koppeln der gezahnten Abschnitte (49') und (51') so erreicht wird, daß eine Übertragung der Drehbewegung zwischen den zwei Abschnitten zugelassen wird, wobei gleichzeitig relative Querverschiebungen der letzteren verhindert wird, so daß das Zahnrad (51') der Ringmutter (74') während deren geradliniger Bewegungen konstant folgt.

20. Bearbeitungseinheit nach Anspruch 18, dadurch gekennzeichnet, daß der gezahnte ringförmige Abschnitt (49') der Ringmutter (74') eine Höhe besitzt, die geringer ist als die des mit einem Gewinde versehenen Abschnitts (47').

21. Bearbeitungseinheit nach Anspruch 19, dadurch gekennzeichnet, daß das Zahnrad (51') in verschraubbarer Weise auf einer mit einem Gewinde versehenen Welle (57') befestigt ist, die sich bezüglich des Hohlkörpers (10) der Einheit längs erstreckt und teilweise im Schlitz (36') des letzteren eingesetzt ist, wobei die durch zumindest eine Stütze (75') des Hohlkörpers (10) frei drehbar getragene Welle (57') an einem ihrer Enden mit bekannten Mitteln (61') zum Bewirken deren Drehung in Uhr- oder Gegenuhrzeigerrichtung verbunden ist, abhängig von der gewünschten Drehrichtung und folglich der Verschiebung der Ringmutter(74').

22. Bearbeitungseinheit nach Anspruch 1, dadurch gekennzeichnet, daß die Stützmittel (20) eine Keilwelle sind, die ein Gehäuse zum Stützen des Hinterendes (14a) der Spindel (14) bildet, wobei die Verbindung durch Längsrippen (14b), die auf der Außenfläche der Spindel (14) ausgebildet sind, und Eingriffnuten, die in der Keilwelle (20) innen ausgebildet sind, erhalten wird.

## Revendications

1. Unité d'usinage pour une machine-outil automatique, du type comprenant un corps creux (10), conçu de façon à être fixé au cadre de la machine-outil via un moyen de verrouillage dont il est pourvu, un tourillon de support d'outils (14) agencé à l'intérieur dudit corps creux (10) et logé à rotation libre sans possibilité de coulissement axial à l'intérieur d'un manchon (12), coulissant à son tour axialement dans ledit corps creux (10), ledit tourillon (14) faisant saillie du corps creux (10) par une extrémité ou extrémité avant, de manière à recevoir et à maintenir un outil (16) devant être actionné, tandis qu'à l'autre extrémité ou extrémité arrière (14a), il est supporté, à rotation fixe et avec la possibilité de coulissement axial, par des moyens de support (20) qui sont conçus de façon à tourner, par un moyen d'actionnement (28) leur étant relié, les déplacements axiaux du tourillon (14) étant effectués, conjointement avec ceux dudit manchon (12), par un moyen d'actionnement coopérant avec ce dernier, caractérisée en ce qu'à l'extrémité arrière du manchon (12) est fixée une bague interne (30) essentiellement annulaire, coaxiale par rapport auxdits moyens de support (20) afin de supporter l'extrémité arrière (14a) du tourillon (14) et ayant un diamètre supérieur à celui dudit moyen de support, axialement à l'opposé de ladite bague (30) se trouvant un épaulement interne (31) du manchon (12) qui est également essentiellement annulaire, coaxial par rapport au tourillon (14) et présentant un diamètre supérieur à ce dernier, ladite bague (30) étant pourvue d'au moins une oreille radiale (34, 34') coulissant dans une fente longitudinale (36, 36') de cette dernière, lorsque le manchon (12) est déplacé axialement, à l'arrière de la bague (30) précitée étant prévue, à l'intérieur du corps creux (10), une cavité (38) essentiellement annulaire, communiquant avec l'extérieur de ce dernier via un couple de conduits (44, 44a) formés dans la paroi dudit corps creux (10), afin d'amener et d'évacuer un fluide sous pression,
les parois opposées de ladite bague (30) et dudit épaulement interne (31) du manchon (12) ayant sensiblement la même hauteur ou épaisseur radiale et définissant, conjointement avec la paroi interne du manchon (12) se trouvant entre eux, un siège (33) sensiblement annulaire comprenant en outre une cavité annulaire (40) supplémentaire adjacente à la cavité annulaire (38) à l'arrière de la bague (30) et pourvue d'une ouverture (42) qui le place en communication avec l'extérieur du corps creux (10), ladite extrémité étant fixée de manière étanche, via un écrou annulaire (64), au contour du passage d'une paroi de ladite cavité annulaire (40) supplémentaire, par laquelle passent l'extrémité arrière (14a) du tourillon (14) et son moyen de support (20).

2. Unité d'usinage selon la revendication 1, caractérisée en ce que ladite bague (30) est pourvue d'au moins deux oreilles radiales (34) disposées en formant sensiblement un angle de 180° l'une par rapport à l'autre, en saillie dudit corps creux (10) et coulissant chacune dans une fente longitudinale (36) de ce dernier.

3. Unité d'usinage selon la revendication 1, dans laquelle lesdits moyens d'actionnement servant à effectuer les déplacements axiaux du manchon sont de type hydraulique, tel qu'un piston hydraulique ou analogue, caractérisée en ce que ledit piston est à double action et comprend une tige (62) fixée dans ledit corps creux (10), coaxialement par rapport audit tourillon (14) et au moyen (20) servant à supporter son extrémité arrière (14a), dont le cylindre consiste en le manchon (12), les parois d'extrémité dudit cylindre étant formées par ladite bague (30) et par ledit épaulement interne (31) du manchon (12), lui étant opposé.

4. Unité d'usinage selon la revendication 3, caractérisée en ce que la première des deux chambres dudit piston à double action est constituée par une partie dudit siège annulaire (33) et ses parois d'extrémité sont formées par ladite bague (30) et par une saillie annulaire (66) intermédiaire de ladite tige (62).

5. Unité d'usinage selon la revendication 4, caractérisée en ce que, lorsque le manchon (12) est complètement rétracté à l'intérieur dudit corps creux (10), entre son épaulement interne (31) et ladite saillie annulaire intermédiaire (66) de la tige (62), il existe une légère séparation qui permet l'introduction, dans l'espace annulaire défini par eux, d'un fluide sous pression, de manière à forcer ledit épaulement interne (31) du manchon (12) à s'écarter de ladite saillie annulaire intermédiaire (66) de la tige (62) et forcer ainsi le manchon (12) à sortir du corps creux (10) de la distance nécessaire, ce déplacement du manchon (12) donnant lieu à la formation de la deuxième chambre de piston à double action.

6. Unité d'usinage selon la revendication 5, caractérisée en ce que l'introduction d'un fluide sous pression dans l'espace annulaire existant entre ledit épaulement interne (31) du manchon (12) et ladite saillie annulaire intermédiaire (66) de la tige (62) du piston a lieu via un conduit (72) formé dans le corps même de sa tige (62), qui communique avec l'un des conduits (44, 44a) formé dans la paroi du corps creux (10).

7. Unité d'usinage selon la revendication 4, caractérisée en ce que l'introduction d'un fluide sous pression dans ladite première chambre du piston à double action a lieu via un conduit (76) supplémentaire également formé dans le corps même de sa tige (62), qui communique avec l'autre des conduits (44, 44a) formé dans la paroi du corps creux (10), l'introduction d'un fluide sous pression dans ladite première chambre provoquant la rétraction de la bague (30) vers des butées fixes (70) du corps creux (10) et ainsi la rétraction du manchon (12) à l'intérieur de ce dernier.

8. Unité d'usinage selon la revendication 3, caractérisée en ce qu'une extrémité de ladite tige (62) du piston à double action fait saillie à l'intérieur de ladite cavité annulaire (40) supplémentaire.

9. Unité d'usinage selon la revendication 3, caractérisée en ce que ledit piston à double action est agencé dans une position rétractée par rapport à l'extrémité du corps creux (10) dont sort le tourillon (14).

10. Unité d'usinage selon la revendication 1, dans laquelle lesdits moyens servant à effectuer les déplacements du manchon sont de type mécanique, tel qu'un agencement à vis (50)/écrou (60), caractérisée en ce que le siège (33) sensiblement annulaire, défini par les parois opposées de ladite bague (30) réalisée d'un seul tenant avec le manchon (12) et ladite saillie interne (31) de ce dernier, loge l'écrou (60) dudit agencement à vis (50)/écrou (60), dans lequel la rotation de la vis (50), qui est axialement stationnaire par rapport audit corps creux (10), assure de manière connue des déplacements axiaux de l'écrou (60) et ainsi du manchon (12).

11. Unité d'usinage selon les revendications 8 et 10, caractérisée en ce que ladite cavité annulaire (40) supplémentaire adjacente à la cavité (38), à l'arrière de ladite bague (30) réalisée d'un seul tenant avec le manchon (12), loge l'extrémité de la vis (50) sur laquelle est bloquée une roue dentée (56), afin de la relier à un moyen (52) assurant sa rotation.

12. Unité d'usinage selon la revendication 1, caractérisée en ce que, transversalement par rapport à chaque fente (36) dans laquelle coulissent lesdites oreilles (34) de la bague (30) réalisée d'un seul tenant avec le manchon (12), est montée une butée à position réglable (74a), contre laquelle s'engage l'une des oreilles (34).

13. Unité d'usinage selon la revendication 12, caractérisée en ce que ladite butée (74a) consiste en une partie d'un écrou à anneau (74) sensiblement annulaire monté sur ledit corps creux (10).

14. Unité d'usinage selon la revendication 13, caractérisée en ce que l'écrou annulaire (74) est déplaçable par un vissage sur le corps creux (10) et est pourvu d'un moyen permettant de le bloquer lorsqu'il a été placé dans la position requise.

15. Unité d'usinage selon la revendication 12, caractérisée en ce que la largeur desdites oreilles (34) de la bague (30) est légèrement inférieure à celle des fentes (36) dans lesquelles elles coulissent.

16. Unité d'usinage selon la revendication 1, caractérisée en ce que les moyens de blocage du corps creux sur le cadre de la machine-outil sont agencés sur un élément de serrage conique (78) annulaire externe, qui peut être fixé en une position réglable sur le corps creux (10).

17. Unité d'usinage selon la revendication 1, caractérisée en ce que ledit manchon (12) est guidé durant ses déplacements, sur toute sa longueur, par la paroi interne dudit corps creux (10), toute la surface latérale du manchon (12) étant en contact avec celle de ladite paroi.

18. Unité d'usinage selon la revendication 1, caractérisée en ce que ladite au moins une oreille (34') présente une hauteur telle que son volume est contenu dans ledit corps creux (10) de l'unité, une bague de butée (74'), contre laquelle s'engage ladite oreille (34'), étant disposée à l'intérieur dudit corps creux (10), coaxialement par rapport au corps du manchon (12), avec la possibilité de rotation et de coulissement longitudinal sur ce dernier, sa surface externe ayant un filetage (47') qui s'engage contre un taraudage (45') correspondant dudit corps creux (10), de manière à assurer, par un vissage, ses déplacements par rapport au manchon (12), ainsi qu'une partie dentée (49') qui s'engage contre une partie dentée (51'), correspondante, du moyen (53') assurant sa rotation sur le corps du manchon (12).

19. Unité d'usinage selon la revendication 18, caractérisée en ce que la partie dentée (51') du moyen (53') assurant la rotation de l'écrou annulaire (74') consistent en un engrenage, mis en contact constant avec la partie annulaire dentée (49') de l'écrou annulaire (74'), le couplage desdites parties dentées (49') et (51') étant obtenu de manière à permettre la transmission du mouvement de rotation entre les deux parties, tout en empêchant des déplacements transversaux relatifs de ces dernières, de manière que l'engrenage (51') suive constamment l'écrou annulaire (74') durant ses déplacements rectilignes.

20. Unité d'usinage selon la revendication 18, caractérisée en ce que la partie annulaire dentée (49') de l'écrou annulaire (74') présente une hauteur inférieure à celle de sa partie filetée (47').

21. Unité d'usinage selon la revendication 19, caractérisée en ce que l'engrenage (51') est monté de manière vissable sur un arbre fileté (57') qui s'étend longitudinalement par rapport au corps creux (10) de l'unité et est partiellement inséré dans la fente (36') de ce dernier, l'arbre (57'), monté à rotation libre sur au moins un support (75') du corps creux (10), étant relié par l'une de ses extrémités à un moyen (61') connu assurant sa rotation dans le sens des aiguilles d'une montre ou dans le sens contraire des aiguilles d'une montre, d'après le sens souhaité de rotation et ainsi le déplacement de l'écrou annulaire (74').

22. Unité d'usinage selon la revendication 1, caractérisée en ce que lesdits moyens de support (20) sont constitués d'un arbre cannelé formant un boîtier servant à supporter l'extrémité arrière (14a) du tourillon (14), la liaison étant obtenue au moyen de nervures longitudinales (14b) formées sur la surface extérieure du tourillon (14) s'engageant dans des gorges formées à l'intérieur de l'arbre cannelé (20).
